# EUROPÄISCHE PATENTSCHRIFT

(11) **EP 3 444 318 B1**
(45) Veröffentlichungstag und Bekanntmachung des Hinweises auf die Patenterteilung: **05.08.2020**
(21) Anmeldenummer: 17207639.0
(22) Anmeldetag: 15.12.2017
(51) Int. Cl.: C09K 21/02, C09K 21/04, C09K 21/06

(54) **ZUSAMMENSETZUNG, BRANDSCHUTZMITTEL MIT DER ZUSAMMENSETZUNG UND BRANDLÖSCHMITTEL MIT DER ZUSAMMENSETZUNG**
COMPOSITION, FIREPROOFING AGENT WITH SAID COMPOSITION AND A FIRE EXTINGUISHING AGENT WITH THE COMPOSITION
COMPOSITION, AGENT IGNIFUGE COMPORTANT LADITE COMPOSITION ET AGENT D'EXTINCTION COMPORTANT LADITE COMPOSITION

(30) Priorität: 17.08.2017 EP 17186625
(43) Veröffentlichungstag der Anmeldung: 20.02.2019
(73) Patentinhaber: Braindrop B.V., 3011 AA Rotterdam (NL)
(72) Erfinder: Karaca, Bilal, 81539 München (DE)
(74) Vertreter: advotec.

(56) Entgegenhaltungen:
- WO-A2-2012/164143
- CN-A- 101 513 744
- CN-B- 103 641 577

## Beschreibung

Die Erfindung betrifft eine Zusammensetzung mit Brandschutz- und Brandlöscheigenschaften sowie ein Verfahren zu deren Herstellung, ein Brandschutzmittel mit einer solchen Zusammensetzung, ein Brandlöschmittel mit einer solchen Zusammensetzung und ein Verfahren unter Einsatz der Zusammensetzung zur Herstellung eines Gegenstandes mit einer Brandschutzeinrichtung.

Als Brand im Sinne der Erfindung gilt jeder mit einer Lichterscheinung (Feuer, Flamme, Glut, Glimmen, Funken) verbundene Verbrennungsvorgang.

Es sei zudem angemerkt, dass sich angegebene Volumenprozentanteile auf das Gesamtvolumen der jeweiligen Zusammensetzung beziehen.

Der Schutz von Personen und Gegenständen vor Brandschäden lässt sich grob in zwei Phasen einteilen. In einer ersten Phase vor einem Brand besteht ein Schutz vornehmlich in brandpräventiven Maßnahmen, zu welchen auch der Brandschutz zählt. Hierbei liegt das Augenmerk auf der Verhinderung einer Entzündung bzw. Brandentstehung und Brandhemmung, insbesondere durch Verwendung von Brandschutzmitteln. In einer zweiten Phase, in welcher ein Brand bereits entstanden ist, kann ein Schutz durch Brandlöschmittel erfolgen. Solche Brandlöschmittel dienen der Verhinderung einer Brandausbreitung und in erster Linie einer Löschung des Brandes.

Hinsichtlich des präventiven Brandschutzes sind aus der Praxis eine Vielzahl brandschützender und brandhemmender Zusammensetzungen bekannt und werden auch als Flammschutzmittel bezeichnet. Diese Zusammensetzungen werden bei der Herstellung eines Endproduktes verwendet, um brennbare Materialien vor Entzündungen zu schützen und/oder die Entstehung eines Brandes möglich lange hinauszuzögern. Das Ziel bekannter Zusammensetzungen ist es, den Feuerwiderstand der Materialen der Endprodukte zu erhöhen. Diese Endprodukte können beispielsweise Baumaterialien oder auch Kinderspielzeug oder Kleidung sein, wobei jeder Lebensbereich betroffen ist, in dem ein Brand unerwünschten Schaden anrichten kann.

Da der Schutz von Werkstoffen und Bauteilen im Brandfall vor Temperatureinwirkung und Flammenschäden ein übliches Verfahren im Rahmen des baulichen Brandschutzes darstellt, findet die Erzeugung von Brandschutz- und brandhemmenden Beschichtungen insbesondere auf diesem Gebiet eine breite Anwendung.

Ein Nachteil einer derartigen Beschichtung bzw. deren Zusammensetzung, die maßgeblich die Eigenschaften der Beschichtung bestimmt, ist jedoch, dass sie nicht für alle Werkstoffe und insbesondere nicht für textile Materialien geeignet ist wie beispielsweise Stoffe, Polster oder Papiererzeugnisse und auch nicht für Fasermaterialien geeignet ist, wie Naturfasern (pflanzliche Fasern, tierische Fasern und Mineralfasern) und Chemiefasern (Fasern aus natürlichen Polymeren, Fasern aus synthetischen Polymeren und Fasern aus anorganischen Stoffen). Bekannte Zusammensetzungen lassen sich nur sehr schwer auftragen und sind nicht von langer Dauer. Meist umfassen derartige Brandschutzbeschichtungen zudem Monoammoniumphosphat, welches in einer Flüssigverbindung beispielsweise auf Textilien auftragbar ist und dann bei einer anschließenden Trocknung auskristallisiert, wodurch die Textilie starr wird und als solche nicht mehr benutzbar ist.

Problembehaftet bei bekannten Brandschutz- und/oder brandhemmenden Zusammensetzungen ist zudem der Einsatz von synthetisch hergestellten chemischen Substanzen, die ökologische Nachteile mit sich bringen. Deren Synthese und Verarbeitung in entsprechende Brandschutzmittel erfordert umfangreiche und energieintensive Herstellungsschritte, die ebenfalls eine Belastung der Umwelt zur Folge haben.

Zudem sind bekannte Brandschutz- oder brandhemmende Zusammensetzungen nicht in Löschmitteln einsetzbar, da deren Zusammensetzungen keine geeigneten Brandlöscheigenschaften aufweisen, obgleich Brandschutz- oder Brandhemmungssysteme bekannt sind, die eine Dispersionsschicht ausbilden können.

Hinsichtlich einer Brandlöschung sind aus der Praxis Brandlöschsysteme bekannt, die bei Anwendung intumeszierende, feuerhemmende Dispersionsschichten bilden. Umgangssprachlich werden derartige Brandlöschsysteme auch als Löschteppich bezeichnet. Bei Temperatureinwirkungen oberhalb von etwa 250 °C wird eine thermochemische Reaktion ausgelöst, bei welcher sich eine Dispersionsschicht des Brandlöschsystems aufschäumt und sich vor bzw. über dem Brandherd ausbreitet. Dadurch wird der Lichterscheinung des Brandes der Sauerstoff entzogen und dieser erstickt.

Das Volumen der Dispersionsschicht kann beispielsweise 80- bis 100-mal größer sein, als bei der Schicht in ihrem Ausgangszustand bzw. ohne Temperatureinwirkung. Derartige Dispersionsschichten können Gase in Schaumporen einschließen, welche eine Sauerstoffzufuhr zu dem Brandherd blockieren und somit die Fortpflanzung eines Brandes verhindern.

Da bisherige Brandlöschsysteme jedoch bei Anwendungen zu großen Beeinträchtigungen der Umwelt führen und/oder lediglich unter großem Aufwand einsetzbar sind, wird in der Praxis versucht entweder die Dicke dieser Dispersionsschichten zu verringern oder eine alternative Beschichtung zu erzeugen.

Zudem sind bisher bekannte Brandlöschsysteme lediglich unzureichend in der präventiven Brandbekämpfung einsetzbar, da sie nicht als Brandschutz dienen.

Aus der Druckschrift CN 101 513 744 A1 ist eine Zusammensetzung bekannt, die Monoamoniumphosphat, Borsäure, Glycerin und Kaliumsorbat umfasst.

Der Erfindung liegt daher die Aufgabe zugrunde, eine Zusammensetzung, ein Verfahren zu deren Herstellung, ein Brandschutzmittel mit einer solchen Zusammensetzung, ein Brandlöschmittel mit einer solchen Zusammensetzung, ein Verfahren unter Einsatz der Zusammensetzung zur Herstellung einer Brandschutzeinrichtung eines Gegenstandes und einen solchen Gegenstand zu schaffen, die die Probleme des Standes der Technik überwinden.

Diese Aufgabe ist erfindungsgemäß durch die Zusammensetzung mit den Merkmalen des Patentanspruches 1, durch das Verfahren zur Herstellung der Zusammensetzung mit den Merkmalen des Patentanspruches 5, durch das Verfahren zur Herstellung der Zusammensetzung mit den Merkmalen des Patentanspruches 6, durch das Brandschutzmittel mit einer Zusammensetzung mit den Merkmalen des Patentanspruches 7, durch das Brandlöschmittel mit einer Zusammensetzung mit den Merkmalen des Patentanspruches 8, durch das Verfahren unter Einsatz der Zusammensetzung zur Herstellung einer Brandschutzeinrichtung eines Gegenstandes mit den Merkmalen des Patentanspruches 9, durch das Verfahren unter Einsatz der Zusammensetzung zur Herstellung einer Brandschutzeinrichtung eines Gegenstandes mit den Merkmalen des Patentanspruches 10, durch die Brandschutzeinrichtung eines Gegenstandes mit den Merkmalen des Patentanspruches 11 und durch ein Verfahren unter Einsatz des Brandlöschmittels zum Löschen eines Brandes mit den Merkmalen des Patentanspruches 12 gelöst.

Die erfindungsgemäße Zusammensetzung umfasst zumindest die folgenden Komponenten:
a) Monoammoniumphosphat;
b) Borsäure;
c) Glyzerin;
d) Carboxymethylcellulose; und
e) Kaliumsorbat.

Die folgende Erfindung betrifft somit eine Zusammensetzung, die ihre vorteilhafte Wirkung beispielsweise als Brandschutz, als Brandhemmer und/oder als Brandlöscher entfalten kann. Mit anderen Worten weist diese Zusammensetzung sowohl Brandschutz- wie auch Brandlöscheigenschaften auf. Die erfindungsgemäße Zusammensetzung ist daher vielseitig anwendbar und nicht auf eine Anwendung vor einem Brand oder während eines Brandes beschränkt.

Die Zusammensetzung umfasst organische und anorganische Bestandteile. Dadurch sind gesundheitsschädigende und/oder umweltbelastende Nebenprodukte weitgehend ausgeschlossen. Eine solch positive Wirkung ergibt sich insbesondere dann, wenn die Komponenten ohne weitere chemische Bearbeitung bzw. Aufbereitung erhalten werden. Es können somit grundsätzlich ausschließlich organische und/oder anorganische Bestandteile eingesetzt werden. Es ist jedoch auch denkbar, die Komponenten synthetisch herzustellen.

Es zeigte sich in Versuchen, dass die erfindungsgemäße Zusammensetzung geeignet ist den Feuerwiderstand von brennbaren Materialien im Vergleich zu bekannten Zusammensetzungen stark zu erhöhen.

Zudem können mit dieser Zusammensetzung ein emissions- und immissionsfreier Brandschutz und eine sehr gute Wirkung bei einem Brandlöschvorgang erzielt werden.

Monoammoniumphosphat ist aus ABC-Feuerlöschpulvern bekannt und dient speziell für die Brandklassen A und B als geeignetes Feuerlöschmittel, da es maßgebliche Löschwirkung aufweist.

Borsäure wirkt in der Zusammensetzung antiseptisch, antibakteriell und dient dem Korrosionsschutz von mit der Zusammensetzung versehenen Gegenständen. Korrosion ist die durch Oxidation verursachte Zerstörung von Metall.

Auch das Glyzerin dient dem Korrosionsschutz. Glyzerin eignet sich zudem insbesondere zum Löschen von Schwelbränden, da es zu einer Sperrschicht über dem Brandherd führt und eine Sauerstoffzufuhr zu dem Brandherd unterbindet. Zudem kühlt es den brennenden Gegenstand herunter, sodass er sich nicht erneut selbst entzünden kann.

Die Zusammensetzung umfasst Monoammoniumphosphat, welches ein Salz ist. Auf ein behandeltes Material wirkt das Monoammoniumphosphat kristallisierend bzw. führt zu Salzrückständen. Aus diesem Grund wird das behandelte Material nach einem Trocknen auch starr, wie beispielsweise eine Textilie. Eine erfindungswesentliche Eigenschaft der Zusammensetzung ist, die Verhinderung der Kristallisation von Monoammoniumphosphat auf dem behandelten Material bei Trocknung. Diese Wirkung wird durch Carboxymethylcellulose erzeugt.

Für den Fall, dass die Zusammensetzung in einer Flüssigkeit gelöst ist, verringert Carboxymethylcellulose zudem die Viskosität der Lösung. Somit haftet die Lösung bzw. die Zusammensetzung gut und lange auf dem Material.

Eine weitere Eigenschaft von Carboxymethylcellulose ist, dass es eine Schicht ausbildet, welche die Sauerstoffdurchlässigkeit verringert und somit einer schnellen Brandlöschung dient.

Kaliumsorbat ist ein Stabilisator und dient der Lebensdauersteigerung der Zusammensetzung. Insbesondere verhindert es die Bakterien-, Schimmel und Pilzbildung.

Auf das angewandte Material wirkt die Zusammensetzung korrosionsschützend und UV-beständig. Die Form und das Aussehen des angewandten Materials bleiben unverändert.

Die Wirkungsweise der erfindungsgemäßen Zusammensetzungen baut auf folgenden Aspekten auf.

Bei einem Brand erfolgt eine endotherme physikalische und/oder chemische Reaktion, wobei Komponenten, die bei deren Zersetzung große Mengen von Energie benötigen, in der Zusammensetzung enthalten sind. Wird die Zusammensetzung erhöhter Temperatur ausgesetzt, wie etwa im Brandfall der Temperatur eines Feuers, wird eine Reihe von chemischen und physikalischen Prozessen in Gang gesetzt.

Diese Prozesse verhindern die Bildung von Gasen wodurch die Vergiftungsgefahr aufgrund von Rauch- und/oder Gasentwicklungen drastisch sinkt. Diese Verhinderung fußt im Wesentlichen auf folgenden chemischen Reaktionen:

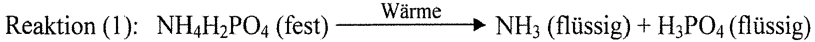

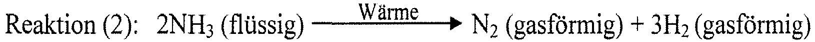

Mittels Reaktion (1) entstehen die Gase Stickstoff (N₂) und Wasserstoff (H₂). Wasserstoff reagiert jedoch mit Sauerstoff (O₂), das in der Umgebung vorhanden ist und bildet normalen Wasserdampf. Es entstehen somit keine gefährlichen Gase.

Unter normalen Bedingungen bzw. falls kein Brandfall vorliegt, reagiert Stickstoff (N₂) nicht mit dem Sauerstoff (O₂). Damit es zwischen diesen beiden Gasen, Stickstoff (N₂) und Sauerstoff (O₂), zu einer Reaktion kommen kann, werden extrem hohe Temperaturen bzw. Energien benötigt, was bei einem Brand nicht der Fall ist. Da Sauerstoff (O₂) somit nicht mit Stickstoff (N₂) reagiert, können auch keine gefährlichen Stickoxide (NOₓ) entstehen.

Die während der Reaktion freigesetzten Inertgase trennen die Bindung zwischen Kohlenstoff (C) und Sauerstoff (O₂). Somit können sich keine gefährlichen Gase wie Kohlenstoffdioxid (CO₂) und kein Rauch bilden. Dadurch kann der Brand erstickt und ein Nachbrennen verhindert werden.

Zwei wesentliche Aspekte fuhren dazu, dass Sauerstoff (O₂) aus der Umgebung des Brandes zur Erstickung desselben entfernt wird.

Erstens zieht der mit der oben genannten Reaktion (2) entstehende Wasserstoff (H₂) den in der Umgebung vorhandenen Sauerstoff (O₂) an sich und bildet Wasserdampf (H₂O) aus. Zweitens kann der mit der oberen Reaktion (2) entstehende Stickstoff (N₂) unter normalen Bedingungen nicht mit dem Sauerstoff (O₂) reagieren. Da beide Gase das gleiche Volumen teilen müssen, wird der Sauerstoff (O₂) durch Stickstoff (N₂) von der Umgebung entfernt. Stickstoff (N₂) besitzt ein kleineres Mol-Gewicht als Sauerstoff (O₂). D.h., dass sich die Stickstoff (N₂)-Moleküle gegenüber den Sauerstoff (O₂)-Molekülen schneller bewegen. Somit sind die Kollisionsgeschwindigkeiten und die Anzahl der Kollisionen der Stickstoff (N₂)-Moleküle höher als die der Sauerstoff (O₂)-Moleküle. Daher werden die Sauerstoff (O₂)-Moleküle aus der Brandumgebung entfernt. Da sich deswegen nicht genug Sauerstoff (O₂) in der Brandumgebung befinden kann, wird keine Bindung zwischen dem Kohlenstoff des brennenden Materials und dem Sauerstoff stattfinden können. Die allgemeine Reaktion für eine Verbrennung

Reaktion (3): CₓH_{y} + O₂ → CO₂ + H₂O

wird also nicht zustande kommen.

Die chemischen und physikalischen Prozesse fördern die Bildung inerter Gase, wie Stickstoff (N₂), die den zur Verbrennung notwendigen Sauerstoff (O₂) von dem Brand fernhalten. Somit wird die Umgebung sehr schnell abgekühlt und die Voraussetzung für ein Feuer verhindert. Eine Abkühlung basiert im Wesentlichen auf den oben genannten Reaktionen (1) und (2).

Der mit dieser Reaktion entstehende Wasserstoff (H₂) bildet mit dem Sauerstoff (O₂) in der Umgebung des Brandes Wasserdampf aus, welcher zur Abkühlung der direkten Umgebung des Brandes führt. Zudem weist auch Stickstoff (N₂) Kühlungseigenschaften auf, so dass der durch diese Reaktion entstehende Stickstoff (N₂) einen großen Anteil zur Abkühlung beiträgt. Im Hinblick auf präventiven Brandschutz bedeutet das, dass die Zündtemperatur für einen Brandfall nicht erreicht werden kann. D.h., die Reaktion für eine Verbrennung kann nicht entstehen. Auch beim Einsatz des Mittels als Brandlöscher wird der Sauerstoff in der Brandumgebung von Wasserstoff (H₂) gebunden. Stickstoff (N₂) kühlt die Umgebung ab und entfernt den noch in der Umgebung vorhandenen Sauerstoff (O₂). Die nötige Zündgeschwindigkeit wird nicht erreicht. Die Bindung zwischen Kohlenstoff (C) und Sauerstoff (O₂) wird getrennt, bzw. verhindert und der Brand gelöscht.

Es zeigte sich, dass die erfindungsgemäße Zusammensetzung geeignet ist, ohne Beschichtung den Feuerwiderstand von brennbaren Materialien zu erhöhen. Somit ist auch ein ausreichender Brandschutz für beispielsweise Materialien wie Textil, Polster, Autositze, Teppiche, Holz gewährleistet. Zudem ist die Zusammensetzung zum Feuerlöschen bzw. Brandlöschen verwendbar, wobei eine sofortige Löschung erzielt und ein Nachbrennen sowie eine Rauchentwicklung sicher verhindert sind.

Bei einer bevorzugten Ausführungsform der Zusammensetzung nach der Erfindung, weisen die Komponenten folgende Volumenprozentanteile auf:
a) Monoammoniumphosphat
   mit einem Volumenprozentanteil von ca. 50 bis ca. 87;
b) Borsäure
   mit einem Volumenprozentanteil von ca. 6 bis ca. 24;
c) Glycerin
   mit einem Volumenprozentanteil von ca. 2 bis ca. 4;
d) Carboxymethylcellulose
   mit einem Volumenprozentanteil von ca. 3 bis ca. 5; und
e) Kaliumsorbat
   mit einem Volumenprozentanteil von ca. 2 bis ca. 5.

Mittels dieser jeweiligen Volumenprozentanteile ist eine Zusammensetzung geschaffen, welche einen noch weiter verbesserten Brandschutz und eine noch weiter verbesserte Brandlöscheigenschaft aufweist.

Bei einer weiteren bevorzugten Ausführungsform der Zusammensetzung nach der Erfindung weisen die Komponenten folgende Volumenprozentanteile auf:
a) Monoammoniumphosphat
   mit einem Volumenprozentanteil von ca. 60 bis ca. 87;
b) Borsäure
   mit einem Volumenprozentanteil von ca. 6 bis ca. 24;
c) Glycerin
   mit einem Volumenprozentanteil von ca. 2 bis ca. 4;
d) Carboxymethylcellulose
   mit einem Volumenprozentanteil von ca. 3 bis ca. 5; und
e) Kaliumsorbat
   mit einem Volumenprozentanteil von ca. 2 bis ca. 5.

Eine solche Zusammensetzung kann in vorteilhafter Weise beispielsweise in der Industrie angewendet werden und zum Brandschutz beispielsweise in Harze und/oder Lacke auf Wasserbasis, in Farben, Kunststoffe, Schwämme, Polster, Matratzen und/oder Polyurethan eingearbeitet werden. Diese Zusammensetzung eignet sich insbesondere dann, wenn zur Herstellung einer Brandschutzeinrichtung ein Pulver bzw. die Zusammensetzung in trockener Form verwendet werden soll oder muss. Als Brandschutzeinrichtung wird jede Einrichtung verstanden, welche dem Brandschutz dient. Beispielsweise ist eine brandschützende Lackierung eine derartige Brandschutzeinrichtung.

Bei einer weiteren bevorzugten Ausführungsform der Zusammensetzung nach der Erfindung umfasst sie zudem folgende Komponenten:
f) Polyacrylsäure,
   vorzugsweise mit einem Volumenprozentanteil von ca. 0,2 bis ca. 1,4; und
g) Natriumbenzoat,
   vorzugsweise mit einem Volumenprozentanteil von ca. 0,1 bis ca. 0,2.

Polyacrylsäure, welche beispielsweise unter dem Handelsnamen "Carbopol" ® vertrieben wird, trägt ebenfalls in positiver Weise zur Brandlöschung bei.

Die Polyacrylsäure verleiht der Zusammensetzung bzw. dem Mittel, in welchem die Zusammensetzung vorhanden ist, eine antibakterielle Eigenschaft, Viskosität und eine erhebliche Beständigkeit gegen UV-Strahlung.

Das Natriumbenzoat schützt gegen Bakterien und erhöht die Haltbarkeit der Zusammensetzung bzw. des Mittels, in welchem die Zusammensetzung vorhanden ist. Alle Komponenten der Zusammensetzung werden insbesondere verwendet, um gesundheitliche und umweltbelastende Risiken zu minimieren.

Zudem ist ein Verfahren zur Herstellung einer Zusammensetzung vorgeschlagen. Das Verfahren umfasst die folgenden Schritte:
- Bereitstellen der Komponenten gemäß einem der Ansprüche 1 bis 4;
- Vermischen der Komponenten gemäß ihren Volumenprozentanteilen zur Herstellung einer Zusammensetzung; und
- Vermahlen der Zusammensetzung.

Dadurch ist eine Zusammensetzung geschaffen, welche in trockener Form vorliegt und in einfacher Weise, beispielsweise in der Industrie, anwendbar ist und dem Brandschutz dient.

Bei diesem Herstellungsverfahren ist es wichtig, dass alle festen Komponenten fein vermahlen werden und sich in kolloidalem Zustand befinden, da die Zusammensetzung zur Erzielung der erfindungsgemäßen Wirkung homogen sein sollte.

Dieses Herstellungsverfahren ist in einfacher Weise durchführbar, wobei die Reihenfolge der Vermischung der einzelnen Komponenten frei wählbar ist und keinen Einfluss auf die Wirkung der Zusammensetzung hat. Die mittels dieses Verfahrens gewonnene Zusammensetzung bzw. das damit erhaltene homogene Pulver eignet sich in ausgezeichneter weise für diverse Industrieanwendungen.

Zudem ist ein alternatives Verfahren zur Herstellung einer Zusammensetzung vorgeschlagen, umfassend die folgenden Schritte:
- Bereitstellen der Komponenten gemäß einem der Ansprüche 1 bis 4;
- Bereitstellen der zusätzlichen Komponenten
   h) Monopropylenglykol
      vorzugsweise mit einem Volumenprozentanteil von ca. 1 bis ca. 5; und
   i) Triethanolamin
      vorzugsweise mit einem Volumenprozentanteil von ca. 1 bis ca. 5.
- Vermischen jeder Komponente a), b), und d), bis g) gemäß ihres Volumenprozentanteils mit jeweils einem Lösemittel j) zur Herstellung von Einzellösungen; wobei das Verhältnis zwischen dem Gesamtvolumen der Komponenten a) bis i) und dem Gesamtvolumen an Lösemittel j) im Bereich von 40:60 bis 60:40 liegt,
- Vermischen der Einzellösungen zur Herstellung einer Lösung;
- Einmischen der Komponenten c, h) und i) in die Lösung;;
- Verdunsten der Lösung zur Herstellung einer Trockenmasse; und
- Vermahlen der Trockenmasse.

Diese Zusammensetzung umfasst in einem Zwischenstadium in vorteilhafter Weise zudem Monopropylenglykol und Tritanolamin, welche beide flüssig sind. Das Einmischen von Monopropylenglykol und Triethanolamin verhindert eine Kristallisation bzw. ein Erstarren und/oder Gefrieren der festen Komponenten bei deren Lösung in dem Lösemittel. Monopropylenglykol und Tritanolamin bewirken zudem in vorteilhafter Weise eine Homogenität der späteren Zusammensetzung. Das Lösungsmittel kann Wasser sein. Es ist denkbar, dass beim Lösen das Verhältnis bezogen auf die Volumenprozentanteile von der Zusammensetzung zu dem Lösemittel etwa 1:1 beträgt.

Tritanolamin führt zudem in vorteilhafter Weise zu einem geeigneten pH-Ausgleich.

Die Reihenfolge der Vermischung der einzelnen Komponenten hat bedeutenden Einfluss auf die Wirkung der Zusammensetzung.

Vorzugsweise kann das Verhältnis zwischen dem Gesamtvolumen der Komponenten a) bis i) und dem Gesamtvolumen an Lösemittel j) 50:50 betragen.

Ein Beispiel zur Herstellung einer erfindungsgemäßen Zusammensetzung wird nachfolgend erläutert. Die Komponenten a) Monoammoniumphosphat, b) Borsäure, d) Carboxymethylcellulose, e) Kaliumsorbat, f) Polyacrylsäure und g) Natriumbenzoat werden jeweils in einem j) Lösungsmittel, welches beispielsweise Wasser sein kann, mit entsprechender Temperatur in einem Behälter gelöst. Anschließend werden die Einzellösungen in einer gemeinsamen Lösung in einem Behälter zusammengeführt. Anschließend wird die Komponente h) Monopropylenglykol hinzugegeben und die Mischung verrührt. Anschließend wird die Komponente c) Glycerin hinzugegeben und die Mischung verrührt. Anschließend wird die Komponente i) Triethanolamin hinzugegeben und die Mischung verrührt. Sodann wird die Lösung zu einer Trockenmasse verdunstet und anschließend zu einem homogenen Pulver vermahlen.

Die Herstellung einer Zusammensetzung gemäß diesem Verfahren ist aufwändig, zeitintensiv und teuer. Das Verfahren hat jedoch den Vorteil, dass Monopropylenglykol und Tritanolamin vorhanden sind, welche sich vorteilhaft auf die Zusammensetzung auswirken. Somit kann eine sehr homogene Zusammensetzung erhalten werden. Wesentlicher Vorteil des Verfahrens ist, dass eine antikristallisierende Eigenschaft in dieser Zusammensetzung vorhanden ist. Diese Eigenschaft ist für diverse Industrieanwendungen von erheblicher Bedeutung, in welchen das Pulver als Brandschutzmittel dienen kann.

Erfindungsgemäß ist zudem ein Brandschutzmittel vorgeschlagen, umfassend die Zusammensetzung mit Komponenten, welche folgende Volumenprozente aufweisen:
a) Monoammoniumphosphat
   mit einem Volumenprozentanteil von ca. 8 bis ca. 25;
b) Borsäure
   mit einem Volumenprozentanteil von ca. 2 bis ca. 12;
c) Glycerin
   mit einem Volumenprozentanteil von ca. 0,5 bis ca. 1,5;
d) Carboxymethylcellulose
   mit einem Volumenprozentanteil von ca. 0,5 bis ca. 2,5;
e) Kaliumsorbat
   mit einem Volumenprozentanteil von ca. 0,5 bis ca. 2,5,
f) Polyacrylsäure
   mit einem Volumenprozentanteil von ca. 0,1 bis ca. 0,7;
g) Natriumbenzoat
   mit einem Volumenprozentanteil von ca. 0,05 bis ca. 0,1; und
wobei das Brandschutzmittel zudem folgende Komponenten umfasst:
h) Monopropylenglykol
   mit einem Volumenprozentanteil von ca. 0,5 bis ca. 2,5;
i) Triethanolamin
   mit einem Volumenprozentanteil von ca. 0,5 bis ca. 2,5; und
j) ein Lösungsmittel
   mit einem Volumenprozentanteil von ca. 53 bis ca. 87,5.

Dieses Brandschutzmittel in flüssiger Form kann mit Vorteil auf faserumfassende Werkstoffe appliziert werden zur Ausbildung einer Brandschutzeinrichtung. Mögliche Gegenstände sind beispielsweise Textilien oder Holz aber auch Werkstoffe mit Poren. Da die Zusammensetzung und somit auch das Brandschutzmittel hautverträglich und frei von toxikologischen Bestandteilen ist, kann es auch auf Haut, insbesondere menschlicher Haut angewendet werden. Hierbei kann das Brandschutzmittel in die Poren einziehen und seine Brandschutzwirkung entfalten, sodass die geschützte Fläche keine Brandschäden erleidet.

Das Lösungsmittel kann Wasser sein, wobei das Lösungsmittel dem Brandschutzmittel als Trägerstoff zum Eintragen in den Werkstoff bzw. das Material dient.

In Abhängigkeit des Einsatzgebietes kann die Zusammensetzung entweder als Brandschutzmittel oder als Brandlöschmittel dienen. Als Brandschutzmittel kann die Zusammensetzung entweder in flüssiger Form oder in Gelform vorliegen, um die Zusammensetzung in dem Brandschutzmittel in geeigneter Weise auf ein Werkstoff bzw. Material zu applizieren. In flüssiger Form ist die als Brandschutzmittel dienende Zusammensetzung sprühfähig und kann somit als Dispersionsmittel benutzt werden. Nach einiger Zeit verdunsten die flüssigen Bestandteile des Brandschutzmittels und die brandschutzaktiven Komponenten verbleiben in und/oder auf dem Werkstoff.

Monopropylenglykol von Triethanolamin dienen der Verhinderung einer Kristallisation von Monoammoniumphosphat, wodurch das erfindungsgemäße Brandschutzmittel dauerhaft und in hochwirksamer Weise auf flexiblen Materialien, wie beispielsweise Textilien aufgebracht werden kann.

Ein Beispiel zur Herstellung eines erfindungsgemäßen Brandschutzmittels wird nachfolgend erläutert. Die Komponenten a) Monoammoniumphosphat, b) Borsäure, d) Carboxymethylcellulose, e) Kaliumsorbat, f) Polyacrylsäure und g) Natriumbenzoat werden jeweils in einem j) Lösungsmittel, welches beispielsweise Wasser sein kann, mit entsprechender Temperatur in einem Behälter gelöst. Anschließend werden die Einzellösungen in einer gemeinsamen Lösung in einem Behälter zusammengeführt. Anschließend wird die Komponente h) Monopropylenglykol hinzugegeben und die Mischung verrührt. Anschließend wird die Komponente c) Glycerin hinzugegeben und die Mischung verrührt. Anschließend wird die Komponente i) Triethanolamin hinzugegeben und die Mischung verrührt, zur Herstellung des Brandschutzmittels.

Erfindungsgemäß ist ein Brandlöschmittel vorgeschlagen, umfassend die Zusammensetzung mit Komponenten, welche folgende Volumenprozente aufweisen:
a) Monoammoniumphosphat
   mit einem Volumenprozentanteil von ca. 5 bis ca. 15;
b) Borsäure
   mit einem Volumenprozentanteil von ca. 1 bis ca. 7;
c) Glycerin
   mit einem Volumenprozentanteil von ca. 0,5 bis ca. 1,5;
d) Carboxymethylcellulose
   mit einem Volumenprozentanteil von ca. 0,5 bis ca. 2,5;
e) Kaliumsorbat
   mit einem Volumenprozentanteil von ca. 0,5 bis ca. 2,5,
f) Polyacrylsäure
   mit einem Volumenprozentanteil von ca. 0,1 bis ca. 0,7; und
g) Natriumbenzoat
   mit einem Volumenprozentanteil von ca. 0,05 bis ca. 0,1;
wobei das Brandlöschmittel zudem folgende Komponenten umfasst:
h) Monopropylenglykol
   mit einem Volumenprozentanteil von ca. 0,5 bis ca. 2,5;
i) Triethanolamin
   mit einem Volumenprozentanteil von ca. 0,5 bis ca. 2,5; und
j) ein Lösungsmittel
   mit einem Volumenprozentanteil von ca. 67 bis ca. 91,5.

Ein weiterer Einsatzbereich der erfindungsgemäßen Zusammensetzung ist neben dem Brandschutz der Einsatz im Brandfall als Brandlöschmittel. Die Zusammensetzung eignet sich ebenfalls hervorragend als Löschmittel und ist beispielsweise bei allen üblichen Feuerbekämpfungsmethoden der Feuerwehr anwendbar, nämlich als Wirkmitteln in flüssigem Löschmittel, in Löschschaum oder auch in Löschpulver.

Das Brandlöschmittel kann beispielsweise in bekannter Weise mittels geeigneter Löschgeräte, wie beispielsweise einem Handfeuerlöscher oder einem Löschfahrzeug, auf einen Brand appliziert werden.

Während des Löschvorgangs mit der erfindungsgemäßen Zusammensetzung erfolgt eine rasche Abkühlung der Umgebung wobei sich keine giftigen Gase, insbesondere kein Kohlenstoffmonoxid bilden kann. Ebenso wird ein Nachbrennen verhindert.

Ein Beispiel zur Herstellung eines erfindungsgemäßen Brandlöschmittels wird nachfolgend erläutert. Die Komponenten a) Monoammoniumphosphat, b) Borsäure, d) Carboxymethylcellulose, e) Kaliumsorbat, f) Polyacrylsäure und g) Natriumbenzoat werden jeweils in einem j) Lösungsmittel, welches beispielsweise Wasser sein kann, mit entsprechender Temperatur in einem Behälter gelöst. Anschließend werden die Einzellösungen in einer gemeinsamen Lösung in einem Behälter zusammengeführt. Anschließend wird die Komponente h) Monopropylenglykol hinzugegeben und die Mischung verrührt. Anschließend wird die Komponente c) Glycerin hinzugegeben und die Mischung verrührt. Anschließend wird die Komponente i) Triethanolamin hinzugegeben und die Mischung verrührt, zur Herstellung des Brandlöschmittels.

Erfindungsgemäß ist zudem ein Verfahren unter Einsatz der Zusammensetzung zur Herstellung einer Brandschutzeinrichtung eines Gegenstandes vorgeschlagen. Das Verfahren umfasst die folgenden Schritte:
- Bereitstellen der Zusammensetzung gemäß einem der Ansprüche 1 bis 4;
- Bereitstellen eines mit einer Brandschutzeinrichtung zu versehenden Gegenstandes; und
- Versehen des Gegenstandes mit der Zusammensetzung zur Herstellung der Brandschutzeinrichtung.

Der Begriff "Versehen" ist weit zu verstehen und umfasst jede Tätigkeit, mit welcher die Zusammensetzung in oder an den Gegenstand oder dessen Bestandteile ein- oder angebracht wird. Hierbei kann die Zusammensetzung in ein Material eingebracht werden, wie beispielsweise Kunststoff. Ein Anwendungsbeispiel ist die Verwendung der Zusammensetzung in einer Lackierung eines Gegenstands zur Herstellung der Brandschutzeinrichtung.

Erfindungsgemäß ist darüber hinaus ein Verfahren unter Einsatz der Zusammensetzung zur Herstellung einer Brandschutzeinrichtung eines Gegenstandes vorgeschlagen. Das Verfahren umfasst die folgenden Schritte:
- Bereitstellen eines Brandschutzmittels gemäß Anspruch 7;
- Bereitstellen eines mit einer Brandschutzeinrichtung zu versehenden Gegenstandes;
- Applizieren des Brandschutzmittels auf den Gegenstand;
- Verdunsten der Bestandteile
   h) Monopropylenglykol;
   i) Triethanolamin; und
   j) Lösungsmittel;
      zur Herstellung der Brandschutzeinrichtung des Gegenstandes.

Das Brandschutzmittel ist aufgrund seiner flüssigen Form in einfacher Weise bei faserumfassenden und porenaufweisenden Materialien anwendbar, da es tief in das Material eindringen kann. Ein Anwendungsbeispiel zur Herstellung der Brandschutzeinrichtung ist das Aufsprühen auf einen Weihnachtsbaum. Das Brandschutzmittel dringt tief in die Holzfasern ein und bildet somit eine Brandschutzeinrichtung, die ein entzünden des Baums sicher verhindert.

Zudem ist erfindungsgemäß eine Brandschutzeinrichtung eines Gegenstandes vorgeschlagen, welche durch ein erfindungsgemäßes Verfahren erhältlich ist.

Des Weiteren umfasst die Erfindung ein Verfahren unter Einsatz des Brandlöschmittels zum Löschen eines Brandes, umfassend die folgenden Schritte:
- Bereitstellen eines Brandlöschmittels gemäß Anspruch 8; und
- Applizieren des Brandlöschmittels auf den Brand zum Löschen desselben.

Mittels des Brandlöschmittels, umfassend die erfindungsgemäße Zusammensetzung, kann ein Brand schnellstmöglich gelöscht werden.

## Patentansprüche

1. Zusammensetzung, welche die folgenden Komponenten umfasst:
a) Monoammoniumphosphat;
b) Borsäure;
c) Glyzerin;
d) Carboxymethylcellulose; und
e) Kaliumsorbat.

2. Zusammensetzung nach Anspruch 1,
wobei die Komponenten folgende Volumenprozentanteile aufweisen:
a) Monoammoniumphosphat
mit einem Volumenprozentanteil von ca. 50 bis ca. 87;
b) Borsäure
mit einem Volumenprozentanteil von ca. 6 bis ca. 24;
c) Glyzerin
mit einem Volumenprozentanteil von ca. 2 bis ca. 4;
d) Carboxymethylcellulose
mit einem Volumenprozentanteil von ca. 3 bis ca. 5; und
e) Kaliumsorbat
mit einem Volumenprozentanteil von ca. 2 bis ca. 5.

3. Zusammensetzung nach Anspruch 1 oder 2,
wobei die Komponenten folgende Volumenprozentanteile aufweisen:
a) Monoammoniumphosphat
mit einem Volumenprozentanteil von ca. 60 bis ca. 87;
b) Borsäure
mit einem Volumenprozentanteil von ca. 6 bis ca. 24;
c) Glyzerin
mit einem Volumenprozentanteil von ca. 2 bis ca. 4;
d) Carboxymethylcellulose
mit einem Volumenprozentanteil von ca. 3 bis ca. 5; und
e) Kaliumsorbat
mit einem Volumenprozentanteil von ca. 2 bis ca. 5.

4. Zusammensetzung nach einem der Ansprüche 1 bis 3,
wobei die Zusammensetzung zudem folgende Komponenten umfasst:
f) Polyacrylsäure,
vorzugsweise mit einem Volumenprozentanteil von ca. 0,2 bis ca. 1,4; und
g) Natriumbenzoat,
vorzugsweise mit einem Volumenprozentanteil von ca. 0,1 bis ca. 0,2.

5. Verfahren zur Herstellung der Zusammensetzung definiert in einem der Ansprüche 1 bis 4, umfassend die folgenden Schritte:
- Bereitstellen der Komponenten gemäß einem der Ansprüche 1 bis 4;
- Vermischen der Komponenten gemäß ihren Volumenprozentanteilen zur Herstellung einer Zusammensetzung; und
- Vermahlen der Zusammensetzung.

6. Verfahren zur Herstellung der Zusammensetzung definiert in einem der Ansprüche 1 bis 4, umfassend die folgenden Schritte:
- Bereitstellen der Komponenten gemäß einem der Ansprüche 1 bis 4;
- Bereitstellen der zusätzlichen Komponenten
h) Monopropylenglycol
vorzugsweise mit einem Volumenprozentanteil von ca. 1 bis ca. 5; und
i) Triethanolamin
vorzugsweise mit einem Volumenprozentanteil von ca. 1 bis ca. 5.
- Vermischen jeder Komponente a), b), und d), bis g) gemäß ihres Volumenprozentanteils mit jeweils einem Lösemittel j) zur Herstellung von Einzellösungen; wobei das Verhältnis zwischen dem Gesamtvolumen der Komponenten a) bis i) und dem Gesamtvolumen an Lösemittel j) im Bereich von 40:60 bis 60:40 liegt,
- Vermischen der Einzellösungen zur Herstellung einer Lösung;
- Einmischen der Komponenten c, h) und i) in die Lösung;
- Verdunsten der Lösung zur Herstellung einer Trockenmasse; und
- Vermahlen der Trockenmasse.

7. Brandschutzmittel, umfassend eine Zusammensetzung nach einem der Ansprüche 1 bis 4,
wobei die Komponenten folgende Volumenprozentanteile aufweisen:
a) Monoammoniumphosphat
mit einem Volumenprozentanteil von ca. 8 bis ca. 25;
b) Borsäure
mit einem Volumenprozentanteil von ca. 2 bis ca. 12;
c) Glycerin
mit einem Volumenprozentanteil von ca. 0,5 bis ca. 1,5;
d) Carboxymethylcellulose
mit einem Volumenprozentanteil von ca. 0,5 bis ca. 2,5;
e) Kaliumsorbat
mit einem Volumenprozentanteil von ca. 0,5 bis ca. 2,5;
f) Polyacrylsäure
mit einem Volumenprozentanteil von ca. 0,1 bis ca. 0,7;
g) Natriumbenzoat
mit einem Volumenprozentanteil von ca. 0,05 bis ca. 0,1; und
wobei das Brandschutzmittel zudem folgende Komponenten umfasst:
h) Monopropylenglycol
mit einem Volumenprozentanteil von ca. 0,5 bis ca. 2,5;
i) Triethanolamin
mit einem Volumenprozentanteil von ca. 0,5 bis ca. 2,5; und
j) ein Lösungsmittel
mit einem Volumenprozentanteil von ca. 53 bis ca. 87,5.

8. Brandlöschmittel, umfassend eine Zusammensetzung nach einem der Ansprüche 1 bis 4,
wobei die Komponenten folgende Volumenprozentanteile aufweisen:
a) Monoammoniumphosphat
mit einem Volumenprozentanteil von ca. 5 bis ca. 15;
b) Borsäure
mit einem Volumenprozentanteil von ca. 1 bis ca. 7;
c) Glyzerin
mit einem Volumenprozentanteil von ca. 0,5 bis ca. 1,5;
d) Carboxymethylcellulose
mit einem Volumenprozentanteil von ca. 0,5 bis ca. 2,5;
e) Kaliumsorbat
mit einem Volumenprozentanteil von ca. 0,5 bis ca. 2,5,
f) Polyacrylsäure
mit einem Volumenprozentanteil von ca. 0,1 bis ca. 0,7; und
g) Natriumbenzoat
mit einem Volumenprozentanteil von ca. 0,05 bis ca. 0,1;
wobei das Brandlöschmittel zudem folgende Komponenten umfasst:
h) Monopropylenglycol
mit einem Volumenprozentanteil von ca. 0,5 bis ca. 2,5;
i) Triethanolamin
mit einem Volumenprozentanteil von ca. 0,5 bis ca. 2,5; und
j) ein Lösungsmittel
mit einem Volumenprozentanteil von ca. 67 bis ca. 91,5.

9. Verfahren unter Einsatz der Zusammensetzung definiert in einem der Ansprüche 1 bis 4 zur Herstellung einer Brandschutzeinrichtung eines Gegenstandes, umfassend die folgenden Schritte:
- Bereitstellen der Zusammensetzung gemäß einem der Ansprüche 1 bis 4;
- Bereitstellen eines mit einer Brandschutzeinrichtung zu versehenden Gegenstandes;
- Versehen des Gegenstandes mit der Zusammensetzung zur Herstellung der Brandschutzeinrichtung des Gegenstandes.

10. Verfahren unter Einsatz des Brandschutzmittels definiert in Anspruch 7 zur Herstellung einer Brandschutzeinrichtung eines Gegenstandes, umfassend die folgenden Schritte:
- Bereitstellen eines Brandschutzmittels gemäß Anspruch 6;
- Bereitstellen eines mit einer Brandschutzeinrichtung zu versehenden Gegenstandes;
- Applizieren des Brandschutzmittels auf den Gegenstand;
- Verdunsten der Bestandteile
h) Monopropylenglycol;
i) Triethanolamin; und
j) Lösungsmittel;
zur Herstellung der Brandschutzeinrichtung des Gegenstandes.

11. Brandschutzeinrichtung eines Gegenstandes, erhältlich durch ein Verfahren nach Anspruch 9 oder 10.

12. Verfahren unter Einsatz des Brandlöschmittels definiert in Anspruch 8 zum Löschen eines Brandes, umfassend die folgenden Schritte:
- Bereitstellen eines Brandlöschmittels gemäß Anspruch 8; und
- Applizieren des Brandlöschmittels auf den Brand zum Löschen desselben.

## Claims

1. A composition comprising the following components:
a) monoammonium phosphate;
b) boric acid;
c) glycerin;
d) carboxymethyl cellulose; and
e) potassium sorbate.

2. The composition according to claim 1,
wherein the percentages by volume of the components are:
a) approx. 50 vol% to approx. 87 vol% of monoammonium phosphate;
b) approx. 6 vol% to approx. 24 vol% of boric acid;
c) approx. 2 vol% to approx. 4 vol% of glycerin;
d) approx. 3 vol% to approx. 5 vol% of carboxymethyl cellulose; and
e) approx. 2 vol% to approx. 5 vol% of potassium sorbate.

3. The composition according to claim 1 or 2,
wherein the percentages by volume of the components are:
a) approx. 60 vol% to approx. 87 vol% of monoammonium phosphate;
b) approx. 6 vol% to approx. 24 vol% of boric acid;
c) approx. 2 vol% to approx. 4 vol% of glycerin;
d) approx. 3 vol% to approx. 5 vol% of carboxymethyl cellulose; and
e) approx. 2 vol% to approx. 5 vol% of potassium sorbate.

4. The composition according to any one of claims 1 to 3,
wherein the composition additionally comprises the following components:
f) polyacrylic acid, its percentage by volume preferably being approx. 0.2 vol% to approx. 1.4 vol%; and
g) sodium benzoate, its percentage by volume preferably being approx. 0.1 vol% to approx. 0.2 vol%.

5. A method for producing the composition defined in any one of claims 1 to 4, the method comprising the following steps:
- providing the components according to any one of claims 1 to 4;
- mixing the components according to their percentages by volume to produce a composition; and
- pulverizing the composition.

6. A method for producing the composition defined in any one of claims 1 to 4, the method comprising the following steps:
- providing the components according to any one of claims 1 to 4;
- providing the additional components
h) monopropylene glycol, its percentage by volume preferably being approx. 1 vol% to approx. 5 vol%; and
i) triethanolamine, its percentage by volume preferably being approx. 1 vol% to approx. 5 vol%;
- mixing each component a), b) and d) to g) with a solvent j) according to its percentage by volume in order to produce individual solutions; wherein the ratio between the total volume of components a) to i) and the total volume of the solvent j) is in a range of 40 : 60 to 60 : 40,
- mixing the individual solutions to produce a solution;
- mixing the components c), h) and i) into the solution;
- evaporating the solution to produce a dry mass; and
- pulverizing the dry mass.

7. A flame retardant comprising a composition according to any one of claims 1 to 4, wherein the percentages by volume of the components are:
a) approx. 8 vol% to approx. 25 vol% of monoammonium phosphate;
b) approx. 2 vol% to approx. 12 vol% of boric acid;
c) approx. 0.5 vol% to approx. 1.5 vol% of glycerin;
d) approx. 0.5 vol% to approx. 2.5 vol% of carboxymethyl cellulose;
e) approx. 0.5 vol% to approx. 2.5 vol% of potassium sorbate;
f) approx. 0.1 vol% to approx. 0.7 vol% of polyacrylic acid;
g) approx. 0.05 vol% to approx. 0.1 vol% of sodium benzoate; and
wherein the flame retardant additionally comprises the following components:
h) approx. 0.5 vol% to approx. 2.5 vol% of monopropylene glycol;
i) approx. 0.5 vol% to approx. 2.5 vol% of triethanolamine; and
j) approx. 53 vol% to approx. 87.5 vol% of a solvent.

8. A fire-extinguishing agent comprising a composition according to any one of claims 1 to 4,
wherein the percentages by volume of the components are:
a) approx. 5 vol% to approx. 15 vol% of monoammonium phosphate;
b) approx. 1 vol% to approx. 7 vol% of boric acid;
c) approx. 0.5 vol% to approx. 1.5 vol% of glycerin;
d) approx. 0.5 vol% to approx. 2.5 vol% of carboxymethyl cellulose;
e) approx. 0.5 vol% to approx. 2.5 vol% of potassium sorbate;
f) approx. 0.1 vol% to approx. 0.7 vol% of polyacrylic acid; and
g) approx. 0.05 vol% to approx. 0.1 vol% of sodium benzoate;
wherein the fire-extinguishing agent additionally comprises the following components:
h) approx. 0.5 vol% to approx. 2.5 vol% of monopropylene glycol;
i) approx. 0.5 vol% to approx. 2.5 vol% of triethanolamine; and
j) approx. 67 vol% to approx. 91.5 vol% of a solvent.

9. A method for producing a fire protection device of an object using the composition defined in any one of claims 1 to 4, the method comprising the following steps:
- providing the composition according to any one of claims 1 to 4;
- providing an object to be provided with a fire protection device;
- providing the object with the composition to produce the fire protection device of the object.

10. A method for producing a fire protection device of an object using the flame retardant defined in claim 7, the method comprising the following steps:
- providing a flame retardant according to claim 6;
- providing an object to be provided with a fire protection device;
- applying the flame retardant to the object;
- evaporating the components
h) monopropylene glycol;
i) triethanolamine; and
j) solvent;
to produce the fire protection device of the object.

11. A fire protection device of an object, the fire protection device being obtainable by a method according to claim 9 or 10.

12. A method for extinguishing a fire using the fire-extinguishing agent defined in claim 8, the method comprising the following steps:
- providing a fire-extinguishing agent according to claim 8; and
- applying the fire-extinguishing agent to the fire in order to extinguish the fire.

## Revendications

1. Composition comprenant les constituants suivants :
a) le phosphate de monoammonium ;
b) l'acide borique ;
c) la glycérine ;
d) la carboxyméthylcellulose ; et
e) le sorbate de potassium.

2. Composition selon la revendication 1,
dans laquelle les pourcentages en volume des constituants sont :
a) d'env. 50 vol% à env. 87 vol% de phosphate de monoammonium ;
b) d'env. 6 vol% à env. 24 vol% d'acide borique ;
c) d'env. 2 vol% à env. 4 vol% de glycérine ;
d) d'env. 3 vol% à env. 5 vol% de carboxyméthylcellulose ; et
e) d'env. 2 vol% à env. 5 vol% de sorbate de potassium.

3. Composition selon la revendication 1 ou 2,
dans laquelle les pourcentages en volume des constituants sont :
a) d'env. 60 vol% à env. 87 vol% de phosphate de monoammonium ;
b) d'env. 6 vol% à env. 24 vol% d'acide borique ;
c) d'env. 2 vol% à env. 4 vol% de glycérine ;
d) d'env. 3 vol% à env. 5 vol% de carboxyméthylcellulose ; et
e) d'env. 2 vol% à env. 5 vol% de sorbate de potassium.

4. Composition selon l'une quelconque des revendications 1 à 3,
dans laquelle la composition comprend en outre les constituants suivants :
f) l'acide polyacrylique, son pourcentage en volume étant, de préférence, d'env. 0,2 vol% à env. 1,4 vol% ; et
g) le benzoate de sodium, son pourcentage en volume étant, de préférence, d'env. 0,1 vol% à env. 0,2 vol%.

5. Procédé de production de la composition définie dans l'une quelconque des revendications 1 à 4, le procédé comprenant les étapes suivantes :
- fournir les constituants selon l'une quelconque des revendications 1 à 4 ;
- mélanger les constituants selon leurs pourcentages en volume afin de produire une composition ; et
- pulvériser la composition.

6. Procédé de production de la composition définie dans l'une quelconque des revendications 1 à 4, le procédé comprenant les étapes suivantes :
- fournir les constituants selon l'une quelconque des revendications 1 à 4 ;
- fournir les constituants additionnels
h) monopropylène glycol, son pourcentage en volume étant, de préférence, d'env. 1 vol% à env. 5 vol% ; et
i) triéthanolamine, son pourcentage en volume étant, de préférence, d'env. 1 vol% à env. 5 vol% ;
- mélanger chaque constituant a), b) et d) à g) avec un solvant j) selon son pourcentage en volume afin de produire des solutions individuelles ; dans lequel le rapport entre le volume total des constituants a) à i) et le volume total du solvant j) est dans une gamme de 40 : 60 à 60 : 40,
- mélanger les solutions individuelles afin de produire une solution ;
- mélanger les constituants c), h) et i) dans la solution ;
- faire évaporer la solution afin de produire une matière sèche ; et
- pulvériser la matière sèche.

7. Agent ignifuge comprenant une composition selon l'une quelconque des revendications 1 à 4,
dans lequel les pourcentages en volume des constituants sont :
a) d'env. 8 vol% à env. 25 vol% de phosphate de monoammonium ;
b) d'env. 2 vol% à env. 12 vol% d'acide borique ;
c) d'env. 0,5 vol% à env. 1,5 vol% de glycérine ;
d) d'env. 0,5 vol% à env. 2,5 vol% de carboxyméthylcellulose ;
e) d'env. 0,5 vol% à env. 2,5 vol% de sorbate de potassium ;
f) d'env. 0,1 vol% à env. 0,7 vol% d'acide polyacrylique ;
g) d'env. 0,05 vol% à env. 0,1 vol% de benzoate de sodium ; et
dans lequel l'agent ignifuge comprend en outre les constituants suivants :
h) d'env. 0,5 vol% à env. 2,5 vol% de monopropylène glycol ;
i) d'env. 0,5 vol% à env. 2,5 vol% de triéthanolamine ; et
j) d'env. 53 vol% à env. 87,5 vol% d'un solvant.

8. Agent extincteur comprenant une composition selon l'une quelconque des revendications 1 à 4,
dans lequel les pourcentages en volume des constituants sont :
a) d'env. 5 vol% à env. 15 vol% de phosphate de monoammonium ;
b) d'env. 1 vol% à env. 7 vol% d'acide borique ;
c) d'env. 0,5 vol% à env. 1,5 vol% de glycérine ;
d) d'env. 0,5 vol% à env. 2,5 vol% de carboxyméthylcellulose ;
e) d'env. 0,5 vol% à env. 2,5 vol% de sorbate de potassium ;
f) d'env. 0,1 vol% à env. 0,7 vol% d'acide polyacrylique ; et
g) d'env. 0,05 vol% à env. 0,1 vol% de benzoate de sodium ;
dans lequel l'agent extincteur comprend en outre les constituants suivants :
h) d'env. 0,5 vol% à env. 2,5 vol% de monopropylène glycol ;
i) d'env. 0,5 vol% à env. 2,5 vol% de triéthanolamine ; et
j) d'env. 67 vol% à env. 91,5 vol% d'un solvant.

9. Procédé de production d'un dispositif de protection contre l'incendie d'un objet en utilisant la composition définie dans l'une quelconque des revendications 1 à 4, le procédé comprenant les étapes suivantes :
- fournir la composition selon l'une quelconque des revendications 1 à 4 ;
- fournir un objet devant être muni d'un dispositif de protection contre l'incendie ;
- munir l'objet de la composition afin de produire le dispositif de protection contre l'incendie de l'objet.

10. Procédé de production d'un dispositif de protection contre l'incendie d'un objet en utilisant l'agent ignifuge défini dans la revendication 7, le procédé comprenant les étapes suivantes :
- fournir un agent ignifuge selon la revendication 6 ;
- fournir un objet devant être muni d'un dispositif de protection contre l'incendie ;
- appliquer l'agent ignifuge à l'objet ;
- faire évaporer les constituants
h) monopropylène glycol ;
i) triéthanolamine ; et
j) solvant ;
afin de produire le dispositif de protection contre l'incendie de l'objet.

11. Dispositif de protection contre l'incendie d'un objet, le dispositif de protection contre l'incendie pouvant être obtenu par un procédé selon la revendication 9 ou 10.

12. Procédé d'extinction d'une incendie en utilisant l'agent extincteur défini dans la revendication 8, le procédé comprenant les étapes suivantes :
- fournir un agent extincteur selon la revendication 8 ; et
- appliquer l'agent extincteur à l'incendie afin d'éteindre celle-ci.
